# EUROPÄISCHE PATENTANMELDUNG

(11) **EP 3 181 336 A1**
(43) Veröffentlichungstag der Anmeldung: **21.06.2017**
(21) Anmeldenummer: 16202722.1
(22) Anmeldetag: 07.12.2016
(51) Int. Cl.: B29C 67/00, B33Y 30/00, B22F 3/105

(54) **3D-DRUCK-VORRICHTUNG FÜR DIE HERSTELLUNG EINES RÄUMLICH AUSGEDEHNTEN PRODUKTS**

(30) Priorität: 17.12.2015 DE 102015122130; 15.04.2016 DE 102016107058
(71) Anmelder: Lilas GmbH, 44319 Dortmund (DE)
(72) Erfinder: Lissotschenko, Vitalij, 58730 Fröndenberg (DE)
(74) Vertreter: Basfeld, Rainer

(57) **Zusammenfassung**

3D-Druck-Vorrichtung für die Herstellung eines räumlich ausgedehnten Produkts, umfassend mindestens eine erste Laserlichtquelle (1), aus der eine erste Laserstrahlung (2) austreten kann, einen Arbeitsbereich (4), dem mit Laserstrahlung (2) zu beaufschlagendes Ausgangsmaterial für den 3D-Druck zugeführt wird oder werden kann, wobei der Arbeitsbereich (4) derart in der 3D-Druck-Vorrichtung angeordnet ist, dass die Laserstrahlung (2) auf den Arbeitsbereich (4) auftrifft, Scannmittel (3, 7), die insbesondere als bewegliche Spiegel ausgebildet sind, wobei die Scanmitteln die Laserstrahlung (2) gezielt gewünschten Orten in dem Arbeitsbereich (4) zuführen können, sowie Mittel zur Vorheizung des Ausgangsmaterials in dem Arbeitsbereich, wobei die Mittel zur Vorheizung mindestens eine zweite Laserlichtquelle (5) umfassen, aus der eine zweite Laserstrahlung (6) austreten kann.

## Beschreibung

Die vorliegende Erfindung betrifft eine 3D-Druck-Vorrichtung für die Herstellung eines räumlich ausgedehnten Produkts gemäß dem Oberbegriff des Anspruchs 1.

Bei herkömmlichen 3D-Druck-Vorrichtungen wird beispielsweise mittels eines Laserstrahls punktförmig ein pulverförmig zugeführtes Ausgangsmaterial mit einer derartigen Energiemenge beaufschlagt, dass ein Prozess, wie beispielsweise ein Aufschmelzen oder Sintern des Ausgangsmaterials, an dem beaufschlagen Ort initiiert wird, wobei dieser Prozess zu einer Verbindung der Körner des Ausgangsmaterials führt. Durch rasterartiges Scannen des Laserstrahls über den Arbeitsbereich wird dadurch schichtweise das herzustellende Produkt erzeugt.

Es gibt 3D-Druck-Vorrichtungen, bei denen ein Vorheizen des Ausgangsmaterials stattfindet. Dies hat den Vorteil, dass nicht die gesamte Erwärmung des Ausgangsmaterials von der beispielsweise rasterartig über das Ausgangsmaterial geführte Laserstrahlung bewirkt werden muss. Nachteilig bei dieser 3D-Druck-Vorrichtung ist es, dass durch die Vorheizung jeweils das gesamte Produkt erwärmt wird, so dass nach dem 3D-Druck ein langwieriger Abkühlungsprozess erfolgen muss.

Das der vorliegenden Erfindung zugrunde liegende Problem ist die Schaffung einer 3D-Druck-Vorrichtung, die effektiver, insbesondere schneller als die aus dem Stand der Technik bekannten Vorrichtungen ist.

Dies wird erfindungsgemäß durch eine 3D-Druck-Vorrichtung der eingangs genannten Art mit den kennzeichnenden Merkmalen des Anspruchs 1 gelöst. Die Unteransprüche betreffen bevorzugte Ausgestaltungen der Erfindung.

Gemäß Anspruch 1 ist vorgesehen, dass die Mittel zur Vorheizung mindestens eine zweite Laserlichtquelle umfassen, aus der eine zweite Laserstrahlung austreten kann. Dadurch besteht die Möglichkeit, das Ausgangsmaterial nur lokal vorzuheizen, so dass im Anschluss an den 3D-Druck-Prozess keine oder nur eine sehr kurze Abkühlungsphase angeschlossen werden muss.

Es kann vorgesehen sein, dass im Betrieb der 3D-Druck-Vorrichtung der Auftreffbereich der mindestens einen ersten Laserstrahlung in dem Arbeitsbereich kleiner ist als der Auftreffbereich der mindestens einen zweiten Laserstrahlung in dem Arbeitsbereich, wobei der Auftreffbereich der mindestens einen ersten Laserstrahlung im Betrieb der 3D-Druck-Vorrichtung relativ zu dem Auftreffbereich der mindestens einen zweiten Laserstrahlung bewegt wird.

Es kann weiterhin vorgesehen sein, dass im Betrieb der 3D-Druck-Vorrichtung die mindestens eine erste Laserstrahlung und die mindestens eine zweite Laserstrahlung in dem Arbeitsbereich zumindest abschnittsweise überlappen, wobei der Auftreffbereich der mindestens einen ersten Laserstrahlung in dem Arbeitsbereich kleiner ist als der Auftreffbereich der mindestens einen zweiten Laserstrahlung in dem Arbeitsbereich, und wobei der Auftreffbereich der mindestens einen ersten Laserstrahlung im Betrieb der 3D-Druck-Vorrichtung relativ zu dem Auftreffbereich der mindestens einen zweiten Laserstrahlung innerhalb des Auftreffbereichs der mindestens einen zweiten Laserstrahlung bewegt wird.

Es besteht beispielsweise die Möglichkeit, dass die erste Laserlichtquelle ein Faserlaser ist und dass die zweite Laserlichtquelle ein Halbleiterlaser oder ein CO₂-Laser ist.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:

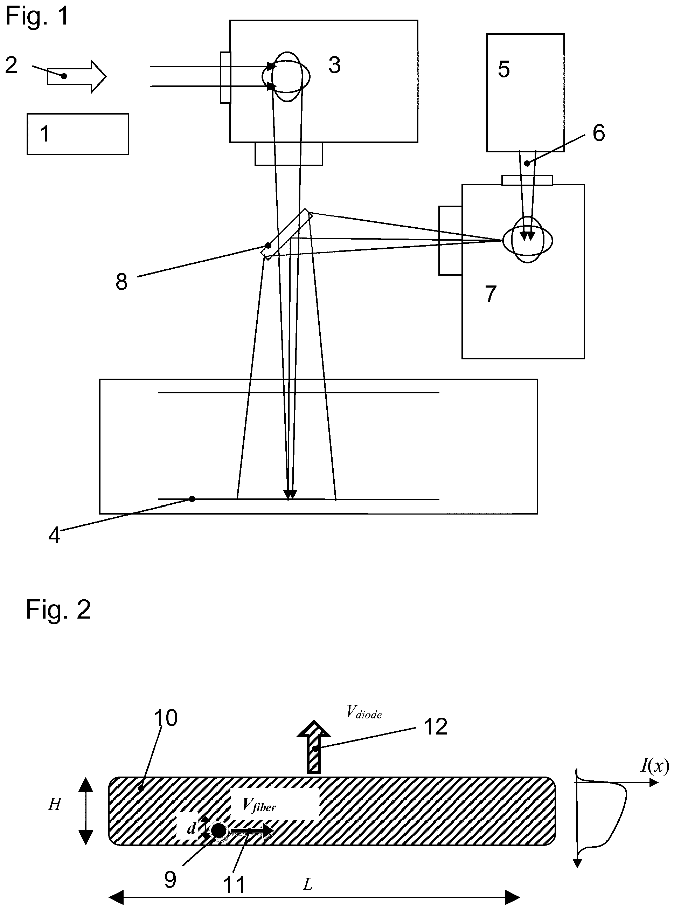

- Fig. 1: eine schematische Darstellung einer ersten Ausführungsform einer erfindungsgemäßen 3D-Druck-Vorrichtung;
- Fig. 2: eine schematische Darstellung einer ersten Anordnung von Auftreffbereichen der mindestens einen ersten und der mindestens einen zweiten Laserstrahlung in der Arbeitsebene mit Andeutung der Bewegung dieser Bereiche und mit einer schematischen Intensitätsverteilung der mindestens einen zweiten Laserstrahlung;

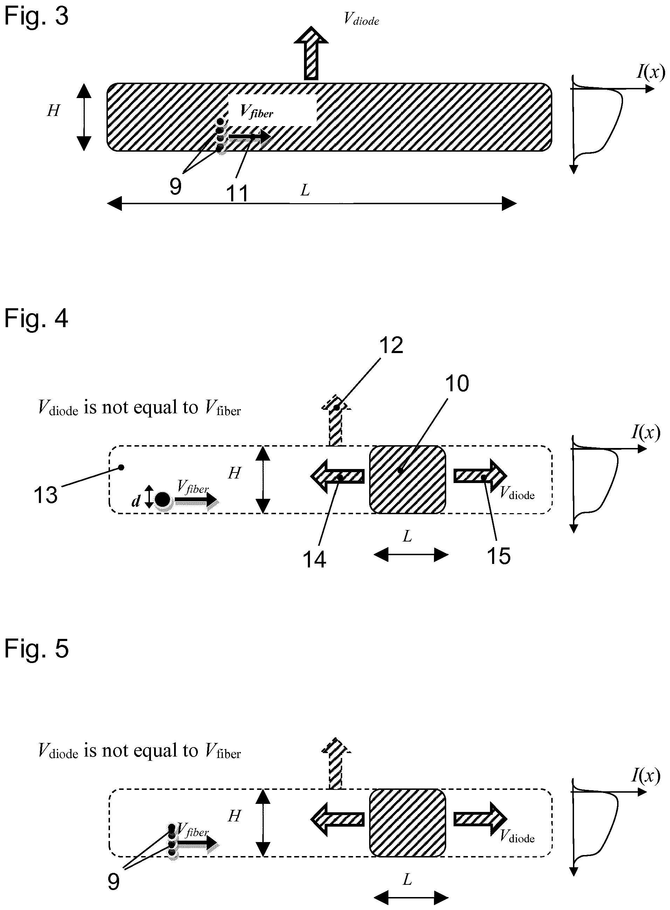

- Fig. 3: eine schematische Darstellung einer zweiten Anordnung von Auftreffbereichen der mindestens einen ersten und der mindestens einen zweiten Laserstrahlung in der Arbeitsebene mit Andeutung der Bewegung dieser Bereiche und mit einer schematischen Intensitätsverteilung der mindestens einen zweiten Laserstrahlung;
- Fig. 4: eine schematische Darstellung einer dritten Anordnung von Auftreffbereichen der mindestens einen ersten und der mindestens einen zweiten Laserstrahlung in der Arbeitsebene mit Andeutung der Bewegung dieser Bereiche und mit einer schematischen Intensitätsverteilung der mindestens einen zweiten Laserstrahlung;
- Fig. 5: eine schematische Darstellung einer vierten Anordnung von Auftreffbereichen der mindestens einen ersten und der mindestens einen zweiten Laserstrahlung in der Arbeitsebene mit Andeutung der Bewegung dieser Bereiche und mit einer schematischen Intensitätsverteilung der mindestens einen zweiten Laserstrahlung;

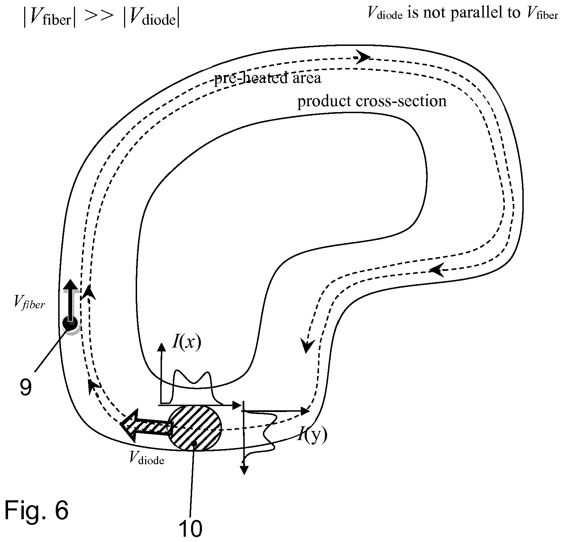

- Fig. 6: eine schematische Darstellung einer fünften Anordnung von Auftreffbereichen der mindestens einen ersten und der mindestens einen zweiten Laserstrahlung in der Arbeitsebene mit Andeutung der Bewegung dieser Bereiche und mit einer schematischen Intensitätsverteilung der mindestens einen zweiten Laserstrahlung;

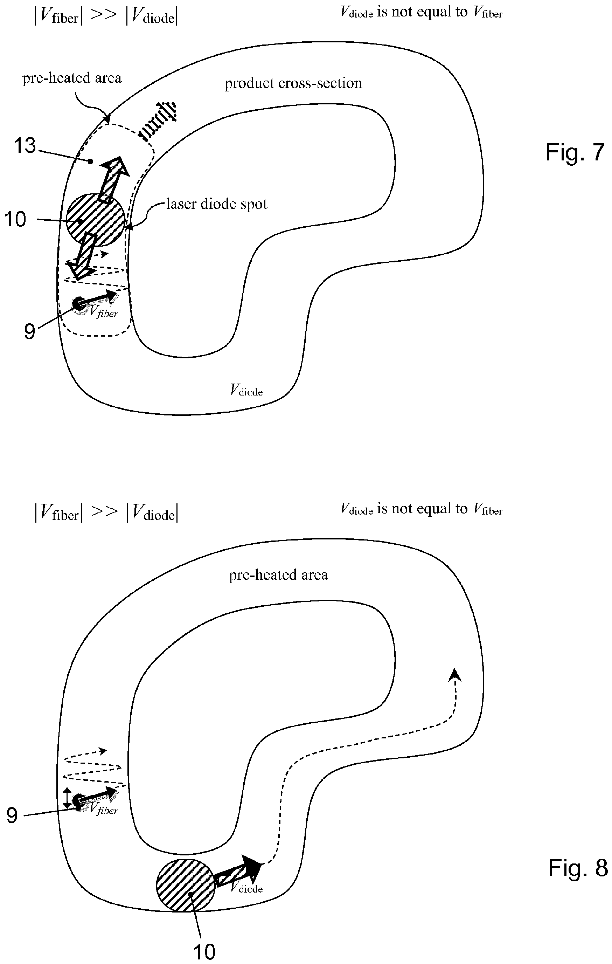

- Fig. 7: eine schematische Darstellung einer sechsten Anordnung von Auftreffbereichen der mindestens einen ersten und der mindestens einen zweiten Laserstrahlung in der Arbeitsebene mit Andeutung der Bewegung dieser Bereiche und mit einer schematischen Intensitätsverteilung der mindestens einen zweiten Laserstrahlung;
- Fig. 8: eine schematische Darstellung einer siebten Anordnung von Auftreffbereichen der mindestens einen ersten und der mindestens einen zweiten Laserstrahlung in der Arbeitsebene mit Andeutung der Bewegung dieser Bereiche und mit einer schematischen Intensitätsverteilung der mindestens einen zweiten Laserstrahlung;

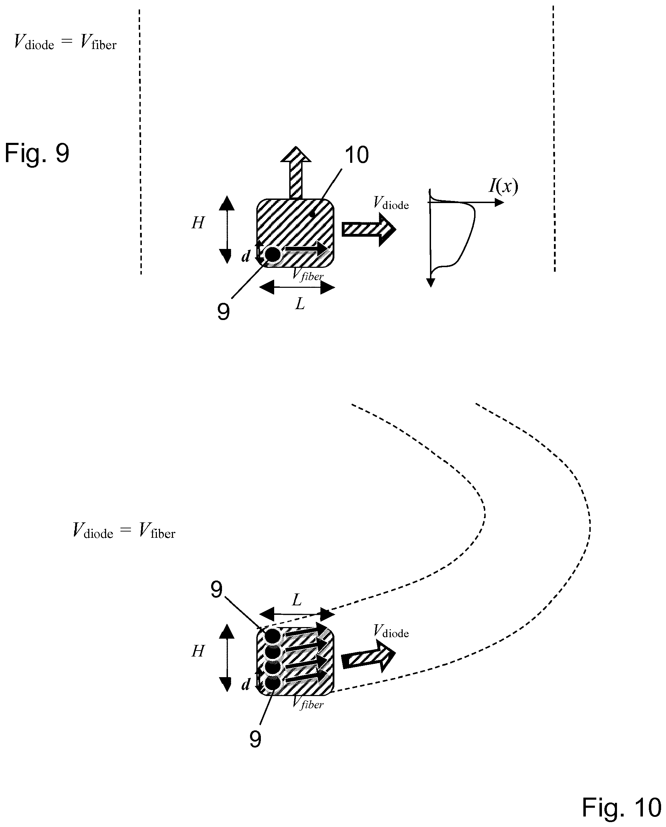

- Fig. 9: eine schematische Darstellung einer achten Anordnung von Auftreffbereichen der mindestens einen ersten und der mindestens einen zweiten Laserstrahlung in der Arbeitsebene mit Andeutung der Bewegung dieser Bereiche und mit einer schematischen Intensitätsverteilung der mindestens einen zweiten Laserstrahlung;
- Fig. 10: eine schematische Darstellung einer neunten Anordnung von Auftreffbereichen der mindestens einen ersten und der mindestens einen zweiten Laserstrahlung in der Arbeitsebene mit Andeutung der Bewegung dieser Bereiche und mit einer schematischen Intensitätsverteilung der mindestens einen zweiten Laserstrahlung;

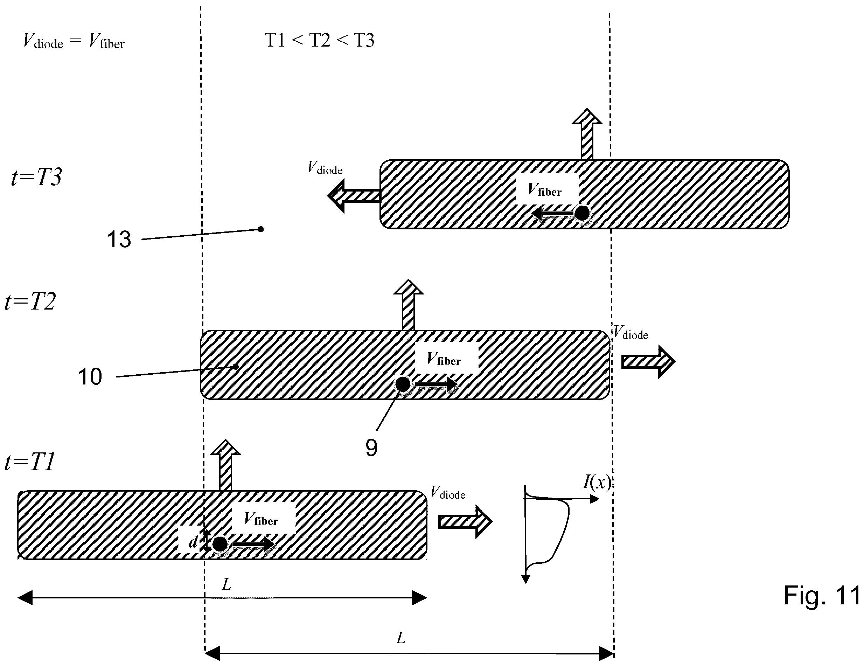

- Fig. 11: eine schematische Darstellung einer zehnten Anordnung von Auftreffbereichen der mindestens einen ersten und der mindestens einen zweiten Laserstrahlung in der Arbeitsebene mit Andeutung der Bewegung dieser Bereiche und mit einer schematischen Intensitätsverteilung der mindestens einen zweiten Laserstrahlung;

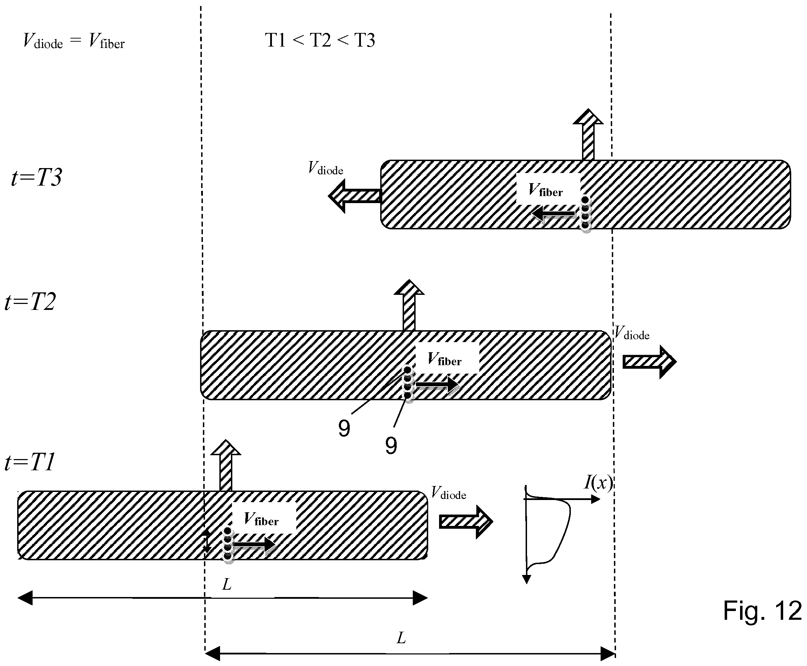

- Fig. 12: eine schematische Darstellung einer elften Anordnung von Auftreffbereichen der mindestens einen ersten und der mindestens einen zweiten Laserstrahlung in der Arbeitsebene mit Andeutung der Bewegung dieser Bereiche und mit einer schematischen Intensitätsverteilung der mindestens einen zweiten Laserstrahlung

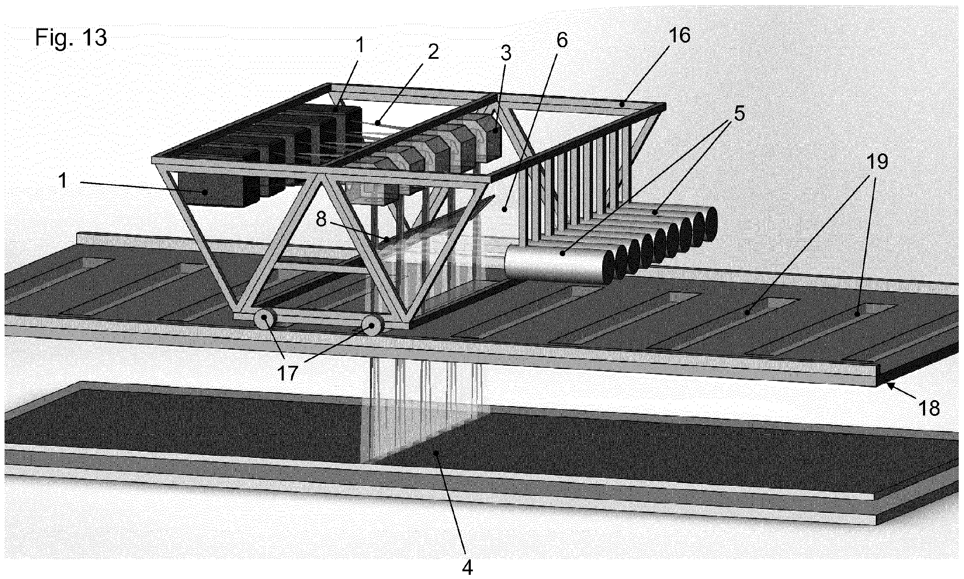

- Fig. 13: eine perspektivische Ansicht einer zweiten Ausführungsform einer erfindungsgemäßen 3D-Druck-Vorrichtung.

In den Figuren sind gleiche und funktional gleiche Teile mit gleichen Bezugszeichen versehen.

Die in Fig. 1 abgebildeten Ausführungsform einer erfindungsgemäßen 3D-Druck-Vorrichtung umfasst mindestens eine erste Laserlichtquelle 1, von der eine erste Laserstrahlung 2 ausgeht. Die erste Laserlichtquelle 1 kann ein Faserlaser sein. In schematisch angedeuteten Scannmitteln 3, die beispielsweise zwei bewegliche Spiegel und gegebenenfalls geeignete Optiken wie F-Theta-Objektive umfassen, wird die erste Laserstrahlung 2 in den Arbeitsbereich 4 gelenkt beziehungsweise fokussiert, in dem ein zu bearbeitendes, insbesondere pulverförmig zugeführtes Ausgangsmaterial angeordnet ist.

Die abgebildete 3D-Druck-Vorrichtung umfasst weiterhin mindestens eine zweite Laserlichtquelle 5, von der eine zweite Laserstrahlung 6 ausgeht. Die zweite Laserlichtquelle 5 kann ein Halbleiterlaser oder ein CO₂-Laser sein und insbesondere eine höhere Leistung als die erste Laserlichtquelle 1 aufweisen.

In schematisch angedeuteten Scannmitteln 7, die beispielsweise zwei bewegliche Spiegel und gegebenenfalls geeignete Optiken wie F-Theta-Objektive umfassen, wird die zweite Laserstrahlung 6 nach links in Fig. 1 auf einen teildurchlässigen Spiegel 8 gelenkt, der insbesondere als dielektrischer dichroitischer Spiegel ausgebildet ist. Der Spiegel 8 lenkt die zweite Laserstrahlung 6 in den Arbeitsbereich 4 um, so dass sie dort zusammen mit der ersten Laserstrahlung 2 auftrifft. Anstelle des Spiegels 8 können auch andere Kombiniermittel, wie beispielsweise polarisationsselektive Bauteile zur Kombination der beiden Laserstrahlungen 2, 6 verwendet werden.

Das Ausgangsmaterial wird von der zweiten Laserstrahlung 6 vorgeheizt, wobei durch zusätzliche Beaufschlagung mit der ersten Laserstrahlung 2 ein Prozess, wie beispielsweise ein Aufschmelzen oder Sintern des Ausgangsmaterials, an dem beaufschlagten Ort initiiert wird, wobei dieser Prozess zu einer Verbindung der Körner des Ausgangsmaterials führt. Durch Scannen der Laserstrahlen 2, 6 über den Arbeitsbereich wird dadurch schichtweise das herzustellende Produkt erzeugt.

In dem abgebildeten Ausführungsbeispiel sind unterschiedliche Scannmittel 3, 7 für die erste und die zweite Laserstrahlung 2, 6 vorgesehen. Es besteht jedoch durchaus auch die Möglichkeit, dass die beiden Laserstrahlungen 2, 6 von den selben Scannmitteln abgelenkt werden. In diesem Fall kann der teildurchlässige Spiegel entfallen.

Es besteht weiterhin die Möglichkeit, die zwischen der mindestens einen zweiten Laserlichtquelle 5 und dem Spiegel 8 keine Scannmittel angeordnet sind, sondern dass der Spiegel 8 selbst beweglich gestaltet ist.

Fig. 2 zeigt schematisch die Auftreffbereiche 9, 10 der ersten und der zweiten Laserstrahlung 2, 6 auf dem Arbeitsbereich. Dabei ist der Auftreffbereich 9 der ersten Laserstrahlung 2 im Wesentlichen kreisförmig und weist einen geringen Durchmesser d auf. Es besteht beispielsweise auch die Möglichkeit, dass der Auftreffbereich einen quadratischen Umriss aufweist. Durch die kleine Abmessung des Auftreffbereichs 9 beziehungsweise Fokusbereichs der ersten Laserstrahlung 2 können kleine Strukturen des zu fertigenden 3D-Bauteils erreicht werden. Der Auftreffbereich 9 der ersten Laserstrahlung 2 wird längs des Pfeils 11 innerhalb des Auftreffbereichs 10 der zweiten Laserstrahlung bewegt.

Der Auftreffbereich 10 der zweiten Laserstrahlung 6 ist demgegenüber vergleichsweise groß und weist einen rechteckigen Umriss mit einer Länge L und einer Höhe H auf. Andere Umrisse und Größen sind durchaus möglich. Die Intensitätsverteilung der zweiten Laserstrahlung 6 kann inhomogen sein, insbesondere eine Verteilung mit einer sich über die Höhe H ändernden Intensität aufweisen, wie dies am rechten Rand der Fig. 2 angedeutet ist. Dadurch ist die Intensität im Bereich des oberen Randes des Auftreffbereichs 10 größer als im Bereich des unteren Randes.

Der Auftreffbereich 10 der zweiten Laserstrahlung 6 wird längs des Pfeils 12 nach oben in Fig. 2 bewegt. Aufgrund der Intensitätsverteilung der zweiten Laserstrahlung 6 und aufgrund der Bewegung ergibt sich ein gleichmäßiger Energieeintrag in das zu bearbeitende, insbesondere aufzuschmelzende Pulver.

Es besteht durchaus die Möglichkeit, dass die Intensitätsverteilung der zweiten Laserstrahlung anders gestaltet ist, beispielsweise homogen ist oder auch in Längsrichtung einen Gradienten aufweist.

Die zweite Laserstrahlung 6 wird über die Abschnitte des Arbeitsbereichs 4 bewegt, in dem in der jeweiligen Lage des Ausgangsmaterials eine Verfestigung des Pulvers erfolgen soll. Die Größe der mit der zweiten Laserstrahlung beaufschlagten Abschnitte richtet sich also nach der Kontur des zu fertigenden Bauteils.

Die zweite Laserstrahlung 2, die letztlich für die punktuelle Verfestigung des Ausgangsmaterials verantwortlich ist, wird in dem Auftreffbereich 10 der zweiten Laserstrahlung 6 bewegt. Dies kann beispielsweise vermittels einer zickzackförmigen Bewegung erfolgen. Insbesondere kann vorgesehen sein, dass die erste Laserstrahlung im Wesentlichen im Bereich des hinteren Randes des Auftreffbereichs 10 der zweiten Laserstrahlung 6 auftrifft, wobei mit hinterer Rand der in Fig. 2 untere Rand beziehungsweise der von der Bewegungsrichtung 12 abgewandte Rand ist.

Fig. 3 zeigt im Unterschied zu Fig. 2 mehrere Auftreffbereiche 9 der ersten Laserstrahlung 2 beziehungsweise mehrerer erster Laserstrahlungen 2. Die Auftreffbereiche 9 können parallel und gleichzeitig in Richtung des Pfeils 11 bewegt werden.

Es können insbesondere mehrere erste Laserlichtquellen 1 vorgesehen werden, die insbesondere separat angesteuert werden können und mehrere erste Laserstrahlungen 2 erzeugen. Dadurch kann die Verfestigung des Ausgangsmaterials gleichzeitig in den mehreren Auftreffbereichen 9 erfolgen, wobei je nach Kontur des zu fertigenden Bauteils in bestimmten Abschnitten des Arbeitsbereichs einzelne der Auftreffbereiche weggelassen werden können.

Es können insbesondere auch mehrere zweite Laserlichtquellen 5 vorgesehen werden, die insbesondere separat angesteuert werden können und mehrere zweite Laserstrahlungen 6 erzeugen. Dadurch kann die Vorheizung des Ausgangsmaterials gleichzeitig in den mehreren Auftreffbereichen 10 erfolgen, wobei je nach Kontur des zu fertigenden Bauteils in bestimmten Abschnitten des Arbeitsbereichs einzelne der Auftreffbereiche weggelassen werden können.

In dem Ausführungsbeispiel gemäß Fig. 3 sind vier Auftreffbereiche 9 erster Laserstrahlungen 2 abgebildet. Es können mehr oder weniger Auftreffbereiche 9 sein, beispielsweise auch 10 oder 20 oder 100 Auftreffbereiche 9.

Fig. 4 zeigt einen kleineren Auftreffbereich 10 der zweiten Laserstrahlung 6. Dieser Auftreffbereich 10 wird in einem vorzuheizenden Abschnitt 13 des Arbeitsbereichs längs der Pfeile 14, 15 hin und her bewegt, wobei gleichzeitig oder danach der Auftreffbereich 10 wie in dem in Fig. 2 abgebildeten Beispiel längs des Pfeils 12 nach oben in Fig. 4 bewegt wird. Auch durch diese Bewegung des Auftreffbereichs 10 kann eine gleichmäßige Vorheizung erzielt werden.

Fig. 5 entspricht Fig. 4 bis auf die Verwendung mehrerer erster Laserstrahlungen 2 und dementsprechend mehrerer Auftreffbereiche 9.

Fig. 6 zeigt eine Ausführungsform, bei der sowohl der Weg des Auftreffbereichs 10 der zweiten Laserstrahlung 6 als auch der Weg des Auftreffbereichs 9 der ersten Laserstrahlung 2 an die Kontur des fertigenden Bauteils angepasst ist. Dadurch ergibt sich für den Auftreffbereich 9 der ersten Laserstrahlung beispielsweise ein spiralförmiger Weg.

Um bei diesem an die Kontur des Bauteils angepassten Weg des Auftreffbereichs 10 der zweiten Laserstrahlung 6 eine möglichst gleichmäßige Vorheizung zu erreichen, kann die Intensitätsverteilung der zweiten Laserstrahlung 6 entsprechend angepasst werden. Beispielsweise kann wie in Fig. 5 angedeutet ein M-Profil vorgesehen werden.

Fig. 7 zeigt eine Ausführungsform, bei der der Auftreffbereich 9 der ersten Laserstrahlung 2 zickzackförmig in dem von dem Auftreffbereich 10 der zweiten Laserstrahlung 6 vorgeheizten Abschnitt 13 bewegt wird. Dabei bewegt sich der Auftreffbereich 9 der ersten Laserstrahlung 2 im Mittel in die gleiche Richtung wie der Abschnitt 13, in dem sich der Auftreffbereich 10 der zweiten Laserstrahlung 6 hin und her bewegt. In Fig. 7 bewegen sich sowohl der Abschnitt 13 als auch der Auftreffbereich 9 der ersten Laserstrahlung 2 im Mittel im Uhrzeigersinn.

Fig. 8 zeigt eine Ausführungsform, bei der sich der Auftreffbereich 9 der ersten Laserstrahlung 2 zickzackförmig im Uhrzeigersinn und der Auftreffbereich 10 der zweiten Laserstrahlung 6 im Gegenuhrzeigersinn bewegt.

Fig. 9 und Fig. 10 zeigen Ausführungsformen, bei denen die Auftreffbereiche 9, 10 im Wesentlichen synchron über den Arbeitsbereich bewegt werden. Dabei gibt es in Fig. 9 nur eine erste Laserstrahlung 2, wohingegen in Fig. 10 die Auftreffbereiche 9 mehrerer erster Laserstrahlungen 2 angedeutet sind.

Fig. 11 und Fig. 12 zeigen eine Ausführungsformen, bei denen der Auftreffbereich 10 der zweiten Laserstrahlung 6 hin und her bewegt wird und dabei abschnittsweise seitlich den vorzuheizenden Abschnitt 13 hinausragt. Dadurch kann eine sehr homogene Vorheizung erreicht werden. Nachteilig ist dabei, dass auch außerhalb des für die Fertigung des 3D-Teils benötigten Bereichs angeordnete Abschnitte des Arbeitsbereichs mitgeheizt werden.

Dabei gibt es in Fig. 11 nur eine erste Laserstrahlung 2, wohingegen in Fig. 12 die Auftreffbereiche 9 mehrerer erster Laserstrahlungen 2 angedeutet sind.

Bei der in Fig. 13 abgebildeten Ausführungsform einer erfindungsgemäßen 3D-Druck-Vorrichtung sind mehrere erste Laserlichtquellen 1 und mehrere zweite Laserlichtquellen 5 vorgesehen. Für jede erste Laserstrahlung 2 der ersten Laserlichtquellen 1 ist jeweils ein Scannmittel 3 vorgesehen, das jeweils zwei bewegliche Spiegel umfasst. Diese Spiegel können insbesondere einen piezobasierten Antrieb aufweisen.

Für die Laserstrahlungen 6 der zweiten Laserlichtquellen 5 sind keine gesonderten Scannmittel vorgesehen. Vielmehr sind die teildurchlässigen Spiegel 8, die die Laserstrahlungen 2, 6 vereinen, beweglich gestaltet, so dass dadurch die zweiten Laserstrahlungen 6 über den Arbeitsbereich gescannt werden können.

Die ersten Laserlichtquellen 1, die zweiten Laserlichtquellen 5, die Scannmittel 3 und die Spiegel 8 sind zu einer insbesondere beweglichen Einheit zusammengefasst. Dazu ist ein Gestell 16 vorgesehen, in dem die vorgenannten Teile gehaltert sind. Das Gestell 16 weist an seiner Unterseite Rollen 17 auf, die eine Bewegung des Gestells 16 auf einer Plattform 18 ermöglichen, die oberhalb des Arbeitsbereichs 4 und beabstandet zu diesem angeordnet ist.

In der Plattform 18 sind mehrere Fenster 19 vorgesehen, durch die die Laserstrahlungen 2, 6 hindurchtreten können. Wenn der unter einem der Fenster 19 liegende Abschnitt des Arbeitsbereichs 4 bearbeitet wurde, kann das Gestell 16 zum nächsten Fenster 19 verfahren werden, so dass ein anderer Abschnitt des Arbeitsbereichs bearbeitet werden kann.

Auf diese Weise können sehr effektiv sehr große Bauteile durch den 3D-Druck erzeugt werden.

## Patentansprüche

1. 3D-Druck-Vorrichtung für die Herstellung eines räumlich ausgedehnten Produkts, umfassend
- mindestens eine erste Laserlichtquelle (1), aus der eine erste Laserstrahlung (2) austreten kann,
- einen Arbeitsbereich (4), dem mit Laserstrahlung (2) zu beaufschlagendes Ausgangsmaterial für den 3D-Druck zugeführt wird oder werden kann, wobei der Arbeitsbereich (4) derart in der 3D-Druck-Vorrichtung angeordnet ist, dass die Laserstrahlung (2) auf den Arbeitsbereich (4) auftrifft,
- Scannmittel (3, 7), die insbesondere als bewegliche Spiegel ausgebildet sind, wobei die Scanmitteln die Laserstrahlung (2) gezielt gewünschten Orten in dem Arbeitsbereich (4) zuführen können,
- Mittel zur Vorheizung des Ausgangsmaterials in dem Arbeitsbereich,
**dadurch gekennzeichnet, dass** die Mittel zur Vorheizung mindestens eine zweite Laserlichtquelle (5) umfassen, aus der eine zweite Laserstrahlung (6) austreten kann.

2. 3D-Druck-Vorrichtung nach Anspruch 1, **dadurch gekennzeichnet, dass** im Betrieb der 3D-Druck-Vorrichtung der Auftreffbereich (9) der mindestens einen ersten Laserstrahlung (2) in dem Arbeitsbereich (4) kleiner ist als der Auftreffbereich (10) der mindestens einen zweiten Laserstrahlung (6) in dem Arbeitsbereich (4), wobei der Auftreffbereich (9) der mindestens einen ersten Laserstrahlung (2) im Betrieb der 3D-Druck-Vorrichtung relativ zu dem Auftreffbereich (10) der mindestens einen zweiten Laserstrahlung (6) bewegt wird.

3. 3D-Druck-Vorrichtung nach Anspruch 1, **dadurch gekennzeichnet, dass** im Betrieb der 3D-Druck-Vorrichtung die mindestens eine erste Laserstrahlung (2) und die mindestens eine zweite Laserstrahlung (6) in dem Arbeitsbereich zumindest abschnittsweise überlappen, wobei der Auftreffbereich (9) der mindestens einen ersten Laserstrahlung (2) in dem Arbeitsbereich (4) kleiner ist als der Auftreffbereich (10) der mindestens einen zweiten Laserstrahlung (6) in dem Arbeitsbereich (4), und wobei der Auftreffbereich (9) der mindestens einen ersten Laserstrahlung (2) im Betrieb der 3D-Druck-Vorrichtung relativ zu dem Auftreffbereich (10) der mindestens einen zweiten Laserstrahlung (6) innerhalb des Auftreffbereichs (10) der mindestens einen zweiten Laserstrahlung (6) bewegt wird.

4. 3D-Druck-Vorrichtung nach einem der Ansprüche 1 bis 3, **dadurch gekennzeichnet, dass** die erste Laserstrahlung (2) eine größere Auflösung beziehungsweise kleinere Fokusbereiche in dem Arbeitsbereich aufweist als die zweite Laserstrahlung (6).

5. 3D-Druck-Vorrichtung nach einem der Ansprüche 1 bis 4, **dadurch gekennzeichnet, dass** die erste Laserlichtquelle (1) ein Faserlaser ist.

6. 3D-Druck-Vorrichtung nach einem der Ansprüche 1 bis 5, **dadurch gekennzeichnet, dass** die zweite Laserlichtquelle (5) ein Halbleiterlaser oder ein CO₂-Laser ist.

7. 3D-Druck-Vorrichtung nach einem der Ansprüche 1 bis 6, **dadurch gekennzeichnet, dass** mehrere erste Laserlichtquellen (1) und/oder mehrere erste Laserstrahlungen (2) mit jeweils mindestens einem Fokusbereich in dem Arbeitsbereich vorgesehen sind.

8. 3D-Druck-Vorrichtung nach einem der Ansprüche 1 bis 7, **dadurch gekennzeichnet, dass** mehrere zweite Laserlichtquellen (5) und/oder mehrere zweite Laserstrahlungen (6) mit jeweils mindestens einem Fokusbereich in dem Arbeitsbereich vorgesehen sind.

9. 3D-Druck-Vorrichtung nach einem der Ansprüche 1 bis 8, **dadurch gekennzeichnet, dass** die mindestens eine erste Laserlichtquelle (1) oder die mehreren ersten Laserlichtquellen (1) so gestaltet ist, dass im Betrieb der Vorrichtung mehrere Auftreffpunkte oder Auftreffbereiche (9) der Laserstrahlung (2) beabstandet zueinander auf dem Arbeitsbereich (4) erzeugt werden.

10. 3D-Druck-Vorrichtung nach Anspruch 9, **dadurch gekennzeichnet, dass** die Scannmittel (3) so gestaltet sind, dass die Auftreffpunkte oder Auftreffbereiche (9) der ersten Laserstrahlung (2) auf dem Arbeitsbereich (4) in der Richtung oder senkrecht zu der Richtung bewegt werden können, in der die Auftreffpunkte oder Auftreffbereiche (9) der Laserstrahlung (2) nebeneinander angeordnet sind.

11. 3D-Druck-Vorrichtung nach einem der Ansprüche 1 bis 10, **dadurch gekennzeichnet, dass** die mindestens eine erste Laserstrahlung (2) und die mindestens eine zweite Laserstrahlung (6) in dem Arbeitsbereich zumindest abschnittsweise überlappen und/oder zeitlich zumindest kurz nacheinander auftreffen.

12. 3D-Druck-Vorrichtung nach einem der Ansprüche 1 bis 11, **dadurch gekennzeichnet, dass** die mindestens zweite Laserstrahlung (6) das zu verfestigende Ausgangsmaterial erwärmt und die mindestens eine erste Laserstrahlung (2) dem Ausgangsmaterial derart zusätzliche Energie zuführt, dass der Verfestigungsprozess bewirkt wird, beispielsweise durch Aufschmelzen oder Sintern.

13. 3D-Druck-Vorrichtung nach einem der Ansprüche 1 bis 12, **dadurch gekennzeichnet, dass** die 3D-Druck-Vorrichtung Optikmittel umfasst, die insbesondere als F-Theta-Objektiv oder Flat-Field-Scanning-Objektive ausgebildet sind und vorzugsweise zwischen den Scannmitteln und dem Arbeitsbereich (4) angeordnet sind, wobei die Optikmittel die erste und/oder die zweite Laserstrahlung (2, 6) in den Arbeitsbereich (4) fokussieren können.

14. 3D-Druck-Vorrichtung nach einem der Ansprüche 1 bis 13, **dadurch gekennzeichnet, dass** die Intensitätsverteilung der zweiten Laserstrahlung (6) auf dem Arbeitsbereich (4) homogen oder inhomogen ist, insbesondere einen Intensitätsgradienten in der Richtung aufweist, in der die Intensitätsverteilung der zweiten Laserstrahlung (6) in dem Arbeitsbereich (4) bewegt wird.
